# EUROPEAN PATENT APPLICATION

(11) **EP 2 296 315 A1**
(43) Date of publication of application: **16.03.2011**
(21) Application number: 09169993.4
(22) Date of filing: 10.09.2009
(51) Int. Cl.: H04L 12/24, H04L 29/08, H04L 29/06

(54) **Remote control of media rendering devices**

(71) Applicant: Almotech Holdings Limited, Tuam 00 Galway (IE)
(72) Inventor: Dooley, Vivian, 00, Tuam (IE); Tiernan, Peter, 00, Tuam (IE); Madden, Robert, 00, Tuam (IE); Petersons, Mareks, 00, Tuam (IE); Kelly, Aaron, 00, Galway (IE); McCauley, Colm, 00, Galway (IE)
(74) Representative: Roche, Dermot

(57) **Abstract**

A computer implemented system (1) for controlling two audio delivery devices (2, 6). The system (1) comprises an operational store (3), a separate media store (4), and a web browser user interface (5). The operational store (3) stores operational data for controlling operation of the audio delivery devices (2, 6). The media store (4) stores audio data to be delivered by the audio delivery devices (2, 6). The operational store (3) and the media store (4) are connected to the audio delivery devices (2, 6) by means of an internet connection for transfer of operational data and audio data to the audio delivery devices (2, 6). The user interface (5) enables a user to select the operational data and audio data to be transferred from the operational store (3) and the media store (4) to the audio delivery devices (2, 6). The user interface (5) is connected to the operational store (3) and the media store (4) by means of an internet connection.

## Description

### Introduction

This invention relates to a system for controlling a media delivery device.

### Statements of Invention

According to the invention there is provided a system for controlling a media delivery device, the system comprising
means for storing operational data for controlling operation of a media delivery device and/or media data to be delivered by a media delivery device,
the storing means being configured to be connected to a media delivery device by means of an internet connection for transfer of operational data and/or media data from the storing means to the media delivery device, and
a user interface means to enable a user to select the operational data and/or media data which is to be transferred from the storing means to the media delivery device,
the user interface means being configured to be connected to the storing means by means of an internet connection.

Because the operational data and/or media data is transferred from the storing means to the media delivery device by means of an internet connection, this arrangement enables the media delivery device to be located remotely from the storing means.

Similarly because the user interface means is connected to the storing means by means of an internet connection, this arrangement enables the user interface means to be located remotely from the storing means.

In one embodiment of the invention the storing means comprises an operational store for storing operational data, and a separate media store for storing media data. By storing operational data separately from media data, this arrangement results in a highly flexible system which is easily scalable.

In another embodiment the system comprises means to encrypt media data prior to transfer from the storing means to a media delivery device.

In one case the system comprises a media delivery device. Preferably the media delivery device is configured to transmit an update request to the storing means to determine whether the operational data and/or media data to be transferred from the storing means to the media delivery device has been altered by a user. Because the update request is initiated by the media delivery device, this arrangement ensures that the internet security protocols will not prevent the operational data and/or media data from being transferred from the storing means to the media delivery device. Ideally the media delivery device is configured to periodically transmit the update request to the storing means. Most preferably operational data and/or media data is transferred from the storing means to the media delivery device responsive to the update request determining that the operational data and/or media data to be transferred has been altered by a user.

In another case the system comprises means to decrypt media data after transfer from the storing means to a media delivery device.

In one embodiment the storing means is configured to be connected to a plurality of media delivery devices. In this manner the system is capable of controlling a plurality of media delivery devices. Preferably the storing means is configured to be connected to one or more media delivery devices at a first location and to one or more media delivery devices at a second location remote from the first location. The system is thus capable of controlling media delivery devices at multiple locations. Ideally the storing means is configured to transfer the same operational data and/or media data to at least a first media delivery device and a second media delivery device. In this manner two or more media delivery devices may be grouped together to operate in the same manner and to deliver the same media data.

In one case the invention provides a system for controlling an audio delivery device wherein the media data comprises audio data to be played by an audio delivery device. In another case the invention provides a system for controlling a video delivery device wherein the media data comprises video data to be played by a video delivery device.

In one embodiment the invention provides a computer implemented system.

In another aspect of the invention there is provided a method for controlling a media delivery device, the method comprising the steps of
storing operational data for controlling operation of the media delivery device and/or media data to be delivered by the media delivery device,
transferring operational data and/or media data to the media delivery device by means of an internet connection, and
enabling a user to select by means of an internet connection the operational data and/or media data which is to be transferred to the media delivery device.

Because the operational data and/or media data is transferred to the media delivery device by means of an internet connection, this arrangement enables the media delivery device to be located remotely from where the operational data and/or media data is stored.

Similarly because of the internet connection, this arrangement enables the user to be located remotely from where the operational data and/or media data is stored.

In one embodiment of the invention the method comprises the step of transferring operational data from an operational store to the media delivery device, and a separate step of transferring media data from a media store to the media delivery device. By storing operational data separately from media data, this arrangement results in a highly flexible system which is easily scalable.

In another embodiment the method comprises the step of encrypting media data prior to transfer to the media delivery device. The media data may be encrypted prior to transmission or in the clear but transported in an encrypted transport stream (HTTPS) and then stored on an encrypted partition on the media delivery device.

In one case the method comprises the step of transmitting an update request from the media delivery device to determine whether the operational data and/or media data to be transferred to the media delivery device has been altered by a user. Because the update request is initiated by the media delivery device, this arrangement ensures that the internet security protocols will not prevent the operational data and/or media data from being transferred to the media delivery device. Preferably the update request is periodically transmitted. Ideally operational data and/or media data is transferred to the media delivery device responsive to the update request determining that the operational data and/or media data to be transferred has been altered by a user.

In another case the method comprises the step of decrypting media data after transfer to the media delivery device.

In one embodiment the operational data and/or media data is transferred to a plurality of media delivery devices. In this manner a plurality of media delivery devices may be controlled. Preferably operational data and/or media data is transferred to one or more media delivery devices at a first location and to one or more media delivery devices at a second location remote from the first location. The method is thus capable of controlling media delivery devices at multiple locations. Ideally the same operational data and/or media data is transferred to at least a first media delivery device and a second media delivery device. In this manner two or more media delivery devices may be grouped together to operate in the same manner and to deliver the same media data.

In one case the invention provides a method for controlling an audio delivery device wherein the media data comprises audio data to be played by an audio delivery device. In another case the invention provides a method for controlling a video delivery device wherein the media data comprises video data to be played by a video delivery device.

The invention provides in a further aspect a computer program product comprising computer program code capable of causing a computer system to perform a method of the invention when the computer program product is run on a computer system.

The computer program product may be embodied on a record medium. The computer program product may be embodied on a carrier signal. The computer program product may be embodied on a read-only memory.

### Brief Description of the Drawings

The invention will be more clearly understood from the following description of an embodiment thereof, given by way of example only, with reference to the accompanying drawings, in which
Fig. 1 is a schematic illustration of a system for controlling a media delivery device according to the invention,
Fig. 2 is another schematic illustration of part of the system of Fig. 1, and
Fig. 3 is a flowchart illustrating operation of the system of Fig. 1.

### Detailed Description

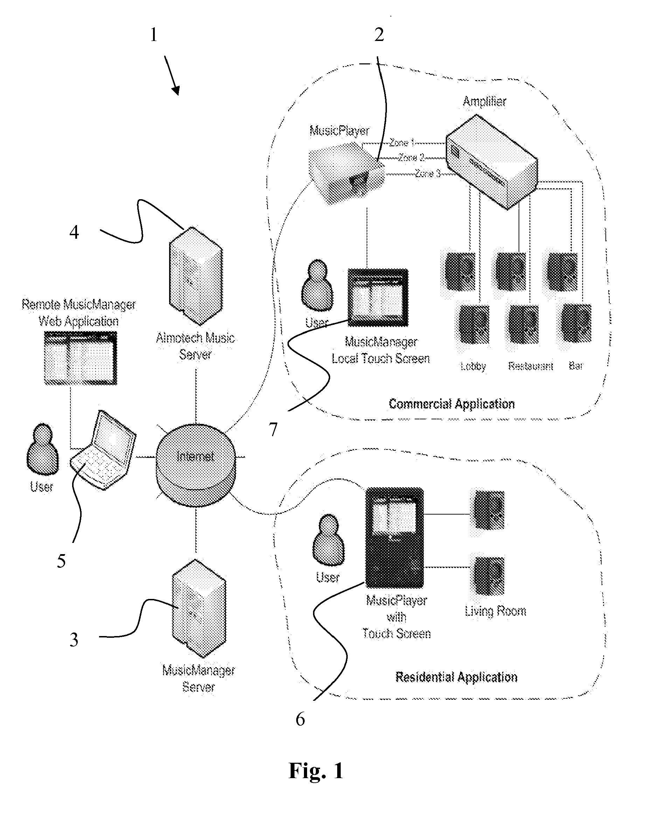

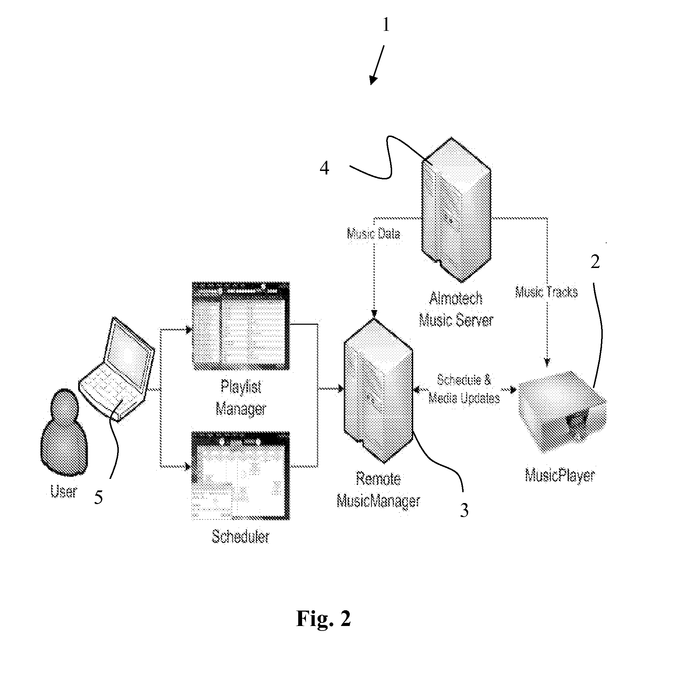

Referring to the drawings, and initially to Figs. 1 and 2 thereof, there is illustrated a computer implemented system 1 according to the invention. The system 1 is suitable for controlling one or more media delivery devices.

The system 1 comprises two media delivery devices 2, 6, an operational store 3, a separate media store 4, and a web browser user interface 5.

The first media delivery device 2 may be located at a first location, and the second media delivery device 6 may be located at a second location remote from the first location. The operational store 3 and the media store 4 may be located remote from the media delivery devices 2, 6. Similarly the user interface 5 may be located remote from the media delivery devices 2, 6, and remote from the operational store 3 and the media store 4.

Each media delivery device 2, 6 has a unique identifier.

The operational store 3 stores operational data for controlling operation of the media delivery devices 2, 6. The media store 4 stores media data to be delivered by the media delivery devices 2, 6. The operational store 3 and the media store 4 are connected to the media delivery devices 2, 6 by means of an internet connection for transfer of operational data and media data from the operational store 3 and the media store 4 respectively to the media delivery devices 2, 6. The operational data and media data transferred from the operational store 3 and the media store 4 respectively to the first media delivery device 2 may be the same as or different to the operational data and media data transferred from the operational store 3 and the media store 4 respectively to the second media delivery device 6.

The user interface 5 enables a user to select the operational data and media data which is to be transferred from the operational store 3 and the media store 4 respectively to the media delivery devices 2, 6. The user interface 5 is connected to the operational store 3 and the media store 4 by means of an internet connection.

Each media delivery device 2, 6 periodically transmits an update request to the operational store 3 and the media store 4 to determine whether the operational data and media data to be transferred from the operational store 3 and the media store 4 respectively to the media delivery device 2, 6 has been altered by a user. The operational data and media data is then transferred from the operational store 3 and the media store 4 respectively to the media delivery device 2, 6 responsive to the update request determining that the operational data and media data to be transferred have been altered by the user.

The system 1 encrypts the media data in the media store 4 prior to transfer from the media store 4 to the media delivery devices 2, 6, and decrypts the media data in the media delivery devices 2, 6 after transfer from the media store 4 to the media delivery devices 2, 6. Alternatively the media data may be encrypted on the media delivery device 2, 6.

In the event of loss of internet connection between the media delivery devices 2, 6 and the operational store 3 or the media store 4, the media delivery devices 2, 6 continue to operate. Any changes which a user makes to the operational data and media data are stored in the operational store 3 and the media store 4 respectively. When internet connection between the media delivery devices 2, 6 and the operational store 3 or the media store 4 is restored, the operational data and media data is then transferred from the operational store 3 and the media store 4 respectively to the media delivery devices 2, 6.

The system 1 does not require internet connectivity in order to play music. An internet connection is required in order to update changes made via the remote user interface 5, for example playlists and schedules. If the user interface 5 is not currently connected to the internet, for example in the event of a power cut, all updates are queued and sent to the media delivery devices 2, 6 when the internet connection is restored.

Each media delivery device 2, 6 may be updated remotely via the web application user interface 5 or locally via a touch screen interface 7.

In this case the system 1 is suitable for controlling two audio delivery devices 2, 6 wherein the media data comprises audio data, such as music or speech, to be played by the audio delivery devices 2, 6. The operational data may comprise a music playlist and/or a schedule of when to play music. It will be appreciated that the system 1 is suitable for controlling a variety of types of media delivery device. For example the system is suitable for controlling a video delivery device wherein the media data comprises video data to be played by a video delivery device.

In use, a user selects the operational data and media data to be transferred from the operational store 3 and the media store 4 respectively to the media delivery devices 2, 6 using the user interface 5. The operational data is stored in the operational store 3, and the media data is stored in the media store 4.

Each media delivery device 2, 6 periodically transmits the update request to the operational store 3 and the media store 4. The update request determines that the operational data and media data to be transferred from the operational store 3 and the media store 4 respectively to the media delivery device 2, 6 have been altered by the user. The system 1 encrypts the media data. Alternatively the media data may be encrypted on the media delivery device 2, 6. The operational data and media data is then transferred from the operational store 3 and the media store 4 respectively to the media delivery devices 2, 6. The system 1 decrypts the media data after transfer from the media store 4 to the media delivery devices 2, 6.

The operational data controls operation of the media delivery devices 2, 6, and the media delivery devices 2, 6 deliver the media data.

The system 1 further comprises a computer program product comprising computer program code capable of causing the computer system 1 to perform the method as described herein when the computer program product is run on the computer system 1. It will be appreciated that the computer program product may be embodied on a record medium, or a carrier signal, or a read-only memory.

Using the web application interface 5, the user may manage the media delivery devices 2, 6 remotely from anywhere in the world. This removes the need to employ local staff to manage the music played. The media delivery devices 2, 6 may be collectively managed within a group, thus reducing the overall time required to make changes to music schedules. Providing collective control of a group of media delivery devices 2, 6 may be especially useful for a corporate user, for example a supermarket chain, where it is desired to schedule similar content for play in a number of remote locations.

The web application interface 5 allows a user to view and control all media delivery devices 2, 6. Media delivery device groups may be created where the same music content is scheduled for play at different locations. A corporate user may create a group of media delivery devices 2, 6 for a region. The corporate user may then group/ungroup media delivery devices 2, 6 in order to treat, update and schedule the content on them collectively or as single entities.

The user has control over media delivery devices 2, 6 installed at various locations. The user may manage the media delivery devices 2, 6 within different groups depending upon the types of customers a group has and the type of marketing content they wish to advertise.

The system 1 enables users to upload advertising media for inclusion in a music playlist schedule, for example a marketing jingle. The user may select an audio or video media clip within the schedule, select the frequency which it is played and the dates and times when the clip will become active. The user may preview and manage the media clips available. If the media clip contains video, a screen may be attached to the media delivery device 2, 6 at the user's site for viewing.

The user may select a group of media delivery device 2, 6 that the advertising clip will apply to, for example schedule a special offer for advertisement within a geographical regional group. The system 1 provides users with the ability of targeting specific regional/demographic areas with advertising media.

The invention provides a web based application interface 5 allowing the user full control over the music and content of the media delivery devices 2, 6. The invention provides a multi-zone background music player with remote web-based control. The invention provides a user with remote control over audio content in their premises without the need for staff intervention.

The invention provides a media content and control delivery system combining hardware and software that enables music provision and control on hardware remotely over an existing broadband connection from an internet enabled PC anywhere in the world without the need to install any proprietary software on that PC. Because propriety software download is not required, no installation/configuration process at the client end is required.

The invention provides the user with complete control over the music and content played within their premises via the simple web interface 5. A user can log into the web application 5 using a secure username and password from anywhere in the world.

The user has the option of using system playlists or creating their own custom playlists. System playlists may be pre-created by music professionals, containing a large collection of tracks from a selection of different genres. Custom playlists may be created with instant access to an extensive online digital music database letting the customer listen to the music that they want, when they want it. As playlists are created, the media delivery device 2, 6 at the user's site is updated with new music content over the internet.

The user may schedule a playlist to become active on a particular day/time within the schedule. A playlist may be scheduled to repeat on a daily/weekly basis, or set to become active at a particular time of a day/month/year.

When a user creates/deletes/schedules a playlist or adds/deletes tracks from the library to the media delivery devices 2, 6, the operational store 3 and the media store 4 do not attempt to contact the client media delivery devices 2, 6 to update. Instead it saves these updates into a database held on the servers 3, 4. The client media delivery devices 2, 6 then periodically connect to the servers 3, 4 to check if it has any updates in the database that need to be downloaded. Currently the media delivery devices 2, 6 connect to the servers 3, 4 every 60 seconds. A separate dedicated process runs alongside the main application on the servers 3, 4 and it is responsible for identifying which media delivery device 2, 6 is contacting it, checking the database for any updates/instructions that exist for that media delivery device 2, 6, and populating the response with the details for the first applicable instruction.

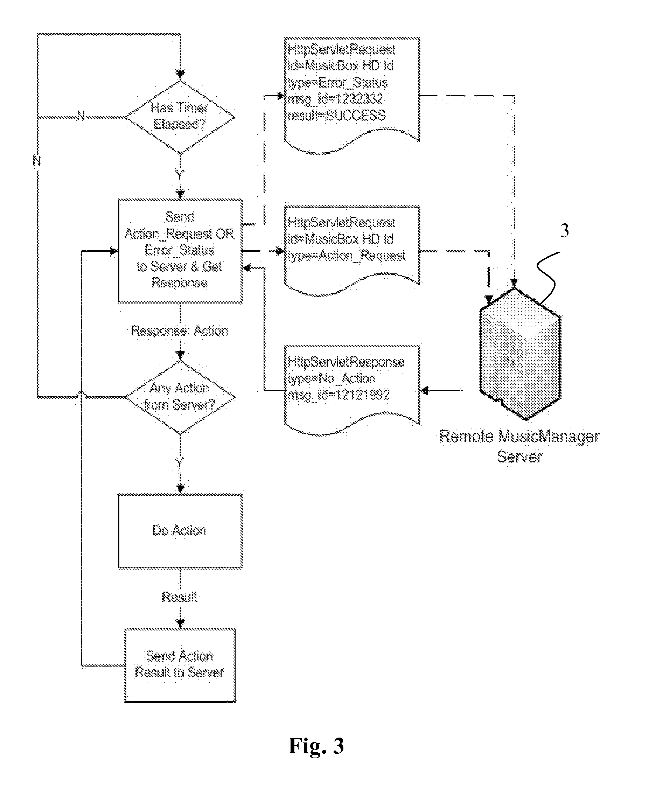

To take an example, a media delivery device 2, 6 connects to the servers 3, 4, servers 3, 4 find a 'get new track' update/message and responds to the media delivery device 2, 6 with a 'get new track' message and the identifier of the track. The media delivery device 2, 6 receives the instruction and then contacts music server 4 requesting a track download with the identifier given in the message. At no time do the servers 3, 4 attempt to 'push' any information to the media delivery device 2, 6. Each time it is the media delivery device 2, 6 that instigates the communication to the servers 3, 4 thus overcoming the fundamental problem of internet server push restrictions. A flowchart of how the system 1 overcomes the problem of server push is illustrated in Fig. 3.

As playlist and schedule changes are made in the media delivery device 2, 6, the messages are queued for collection by the media delivery device 2, 6 at the customer's site. The media delivery device 2, 6 checks for messages from the media store 4 at regular intervals. If the media store 4 has data to send, the media delivery device 2, 6 pulls the data from the media store 4. A typical flow of information (music/schedule updates) from the media store 4 to the media delivery device 2, 6 is illustrated in Fig. 2.

The user may access the media delivery device 2, 6 from anywhere in the world using a computer connected to the internet. The media delivery device 2, 6 may be controlled via the web, or via an optional local touch screen interface. Any changes made by the user via the web application are automatically updated to the media delivery device 2, 6 connected to the internet. As the media delivery device receives all updates via the internet, there is no need to use recordable media such as DVD, CD, or a USB key.

Music content may be updated to the media delivery device 2, 6 by the following means:
System/Dynamic playlists: Any changes to system or dynamic playlists are automatically updated to all connected media delivery devices 2, 6.
Customer created playlists: Custom playlists may be created or updated by logging on to the internet application 5 from any location in the world. The user may use an online digital music database to select the music that they want, when they want it.

Using the web application 5, the user only needs a computer connected to the internet in order to make changes to the music schedule of the media delivery devices 2, 6. Schedule changes may be applied to a group of media delivery devices 2, 6 or to each media delivery device 2, 6 the user is associated with.

A user may access the web application 5 over the internet anytime, anyplace and anywhere. This provides a level of control to the user for their background music systems. Groups may be created, allowing customers to view and schedule the same music content for play at different locations.

The content of the media delivery device 2, 6 in a user's premises may be controlled exclusively via the web, thus preventing the need for staff intervention.

A user may customise the music collection with instant access to an online digital music database. A user may select the album, artist or song required by browsing by genre or searching by keyword. A customised playlist may be created by the user and scheduled for play at an appropriate time. A media delivery device 2, 6 with a dynamic playlist will automatically have its content updated without user interaction.

The invention provides full control of a media delivery device 2, 6 from any PC anywhere in the world without the need for any installation process at the user's PC or MAC that accesses the web interface, and it may do so utilizing any regular broadband connection that the customer may already have. To exercise control the user simply needs to go to an internet address on any internet enabled PC, authenticate themselves via a username and password, and their system is viewable and configurable from that machine. The invention provides a web based application. The application is hosted on the web server without the requirement for software to be downloaded and installed onto a PC.

The system 1 enables the media delivery device 2, 6 to have any configuration. The system 1 retains the "state" information for the media delivery device 2, 6 and the system 1 is resilient to network variability in the manner in which the system 1 transmits the logical state of the media delivery device 2, 6 to the physical state of the media delivery device 2, 6. The loss of internet connectivity does not inhibit the system 1 other than introducing a time delay. The system 1 implements the transfer by setting up message queues in the parts of the system 1 as they are required in the transfer of state information from the servers 3, 4 to the media delivery devices 2, 6.

The system 1 holds a record of the "state" of each media delivery device 2, 6. As a user changes the operational data for a media delivery device 2, 6 or group of media delivery devices 2, 6, the logical representation of the media delivery device state is changed. The messaging protocol and message queues ensure that the physical state of the media delivery device 2, 6 aligns with the logical state of the media delivery device 2, 6 over time, in a resilient fashion and compensating for network interruptions. By holding the logical state of the media delivery device 2, 6 remotely from the media delivery device 2, 6 itself, clones of a particular media delivery device 2, 6 may be made to facilitate extensions to existing units and groups and also to permit disaster recovery.

With the local touch screen access 7, there is the possibility of locally editing operational or state data. In the event where the locally edited state of a media delivery device 2, 6 is reconciled with the servers 3, 4, the system 1 maintains consistency in the logical and physical state of the media delivery device 2, 6 regardless of the nature of the change in operational data alterations through either remote or local interface.

A dynamic playlist may be updated on the media delivery device 2, 6 without any user intervention.

The embodiment of the invention described previously with reference to the accompanying drawings comprises a computer system and processes performed by the computer system. However the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, such as a CD-ROM, or magnetic recording medium, such as a floppy disk or hard disk. The carrier may be an electrical or optical signal which may be transmitted via an electrical or an optical cable or by radio or other means.

The invention is not limited to the embodiment hereinbefore described, with reference to the accompanying drawings, which may be varied in construction and detail.

## Claims

1. A system for controlling a media delivery device, the system comprising
means for storing operational data for controlling operation of a media delivery device and/or media data to be delivered by a media delivery device,
the storing means being configured to be connected to a media delivery device by means of an internet connection for transfer of operational data and/or media data from the storing means to the media delivery device, and
a user interface means to enable a user to select the operational data and/or media data which is to be transferred from the storing means to the media delivery device,
the user interface means being configured to be connected to the storing means by means of an internet connection.

2. A system as claimed in claim 1 wherein the storing means comprises an operational store for storing operational data, and a separate media store for storing media data.

3. A system as claimed in claim 1 or 2 wherein the system comprises means to encrypt media data prior to transfer from the storing means to a media delivery device.

4. A system as claimed in any of claims 1 to 3 wherein the system comprises a media delivery device.

5. A system as claimed in claim 4 wherein the media delivery device is configured to transmit an update request to the storing means to determine whether the operational data and/or media data to be transferred from the storing means to the media delivery device has been altered by a user.

6. A system as claimed in claim 5 wherein the media delivery device is configured to periodically transmit the update request to the storing means.

7. A system as claimed in claim 5 or 6 wherein operational data and/or media data is transferred from the storing means to the media delivery device responsive to the update request determining that the operational data and/or media data to be transferred has been altered by a user.

8. A system as claimed in any of claims 1 to 7 wherein the system comprises means to decrypt media data after transfer from the storing means to a media delivery device.

9. A system as claimed in any of claims 1 to 8 wherein the storing means is configured to be connected to a plurality of media delivery devices.

10. A system as claimed in claim 9 wherein the storing means is configured to be connected to one or more media delivery devices at a first location and to one or more media delivery devices at a second location remote from the first location.

11. A system as claimed in claim 9 or 10 wherein the storing means is configured to transfer the same operational data and/or media data to at least a first media delivery device and a second media delivery device.

12. A system for controlling an audio delivery device as claimed in any of claims 1 to 11 wherein the media data comprises audio data to be played by an audio delivery device.

13. A system for controlling a video delivery device as claimed in any of claims 1 to 11 wherein the media data comprises video data to be played by a video delivery device.

14. A method for controlling a media delivery device, the method comprising the steps of
storing operational data for controlling operation of the media delivery device and/or media data to be delivered by the media delivery device,
transferring operational data and/or media data to the media delivery device by means of an internet connection, and
enabling a user to select by means of an internet connection the operational data and/or media data which is to be transferred to the media delivery device.

15. A computer program product comprising computer program code capable of causing a computer system to perform a method as claimed claim 14 when the computer program product is run on a computer system.
